# EUROPEAN PATENT SPECIFICATION

(11) **EP 3 936 084 B1**
(45) Date of publication and mention of the grant of the patent: **07.08.2024**
(21) Application number: 19918787.3
(22) Date of filing: 08.03.2019
(51) Int. Cl.: A61C 19/00, A61C 1/00

(54) **WATER QUANTITY DETECTION DEVICE AND DENTAL TREATMENT DEVICE**
VORRICHTUNG ZUR ERFASSUNG VON WASSERMENGEN UND ZAHNÄRZTLICHE BEHANDLUNGSVORRICHTUNG
DISPOSITIF DE DÉTECTION DE QUANTITÉ DE L'EAU ET DISPOSITIF DE TRAITEMENT DENTAIRE

(43) Date of publication of application: 12.01.2022
(73) Proprietor: Takara Belmont Corporation, Osaka-shi, Osaka 542-0083 (JP)
(72) Inventor: YAMADA, Tetsuya, Osaka-shi, Osaka 542-0083 (JP); IFUKU Fumiya, Osaka-shi, Osaka 542-0083 (JP)
(74) Representative: Strehl Schübel-Hopf & Partner
(86) International application number: PCT/JP2019/009512
(87) International publication number: WO 2020/183548

(56) References cited:
- WO-A1-98/23222
- JP-A- 2006 158 967
- JP-A- 2012 045 275
- JP-A- 2013 236 785
- JP-A- 2015 113 138
- JP-A- H0 672 493
- JP-A- H0 672 493
- JP-A- H06 312 790

## Description

### [Technical Field]

The present disclosure relates to a water-level detection device that can detect a state of remaining amount and to a dental treatment unit equipped with the water-level detection device.

### [Background Art]

In dental treatment facilities, such as a dental clinic, clean water is necessary, for example, to cool and wash a part to be treated or for a patient to gargle. For example, a dental treatment unit described in PTL 1 includes a cartridge with a filter for filtrating tap water.

Another type of dental treatment unit uses water contained in a container instead of using tap water. The container may be disposed outside the dental treatment unit or may be disposed inside. In the case of the dental treatment unit with the container being disposed outside, it is easier for a dentist or a dental hygienist (hereinafter referred to as a "practitioner") to know the remaining amount of water. On the other hand, in the case of the dental treatment unit with the container being disposed inside, the design of the exterior can be determined without taking into consideration of container placement although the remaining amount of water cannot be viewed.

In a portable dental treatment unit described in PTL 2, for example, water to be used for treatment is stored in a container. The remaining amount of water is detected by a weight sensor or the like, and the container is refilled with water at appropriate timing.

### [Citation List]

### [Patent Literature]

[PTL 1] Japanese Unexamined Patent Application Publication No. 2015-211934
[PTL 2] Japanese Unexamined Patent Application Publication No. 2013-236785

JP H06 72493 A discloses a container used to reduce the residual contents in a liquid feeder using a disposable container to effectively use the liquid and to indicate the reduced contents by a sensor. The container is composed of a vessel filled with a liquid, a feed pipe connected to the vessel at one end thereof, a pump chamber with walls made of a soft material connected to the other end of the feed pipe at one end thereof, a delivery tube connected to the other end of the pump chamber.

WO 98/23222 A1 discloses a dental scaling system that includes a scaling instrument with a handpiece and a scaling tip at the end of the handpiece. An ultrasonic transducer is connected to the scaling tip, and there is an irrigant outlet in the scaling tip. A cable is attachable to the handpiece and includes an irrigant passage and two lead wires for supplying irrigant and electrical energy to the handpiece. An irrigant supply bottle is releasably attachable on a housing, and the cable is attachable on the housing. The housing includes an air pump to pressurize and transfer irrigant liquid from the irrigant supply bottle through the cable to the handpiece. The housing also includes electronics to power and control the ultrasonic transducer. Each irrigant supply bottle includes a mounting member with a pair of wings, received in a forked docking assembly on the housing, with the mounting member lockable in the docking assembly.

### [Summary of Invention]

### [Technical Problem]

Using the weight sensor, however, is not always convenient. For example, the weight sensor needs to weigh different types of containers with different volumes and detect different weights for different containers, which may require a complicated control scheme.

The present disclosure has been made in such circumstances. An object of the present disclosure is to provide a water-level detection device and a dental treatment unit that can detect the timing to supply liquid with a simple configuration.

### [Solution to Problem]

To achieve the above objective, a water-level detection device (20, 220, 320) according to the present invention comprises:
a container (13) attached to a dental treatment unit (1) and filled with a liquid to be used for dental treatment;
a tilting mechanism (21) configured to tilt the container (13) in accordance with a remaining amount of the liquid; and
a detection device (22) configured to detect tilt of the container (13), wherein
the tilting mechanism (21) includes
   a base member (26),
   a tiltable support (30) that is positioned below the base member (26) and supported by the base member (26) with a revolving shaft (29) interposed therebetween and from which the container (13) is suspended, wherein the tiltable support (30) is tilted pivotally on the revolving shaft (29), and
   an elastic member (33) that is fitted between the base member (26) and the tiltable support (30) and that presses the tiltable support (30) in a direction of tilting the tiltable support (30).

The water-level detection device and the dental treatment unit according to the present invention are defined in the appended claims.

The water-level detection device and the dental treatment unit according to the present disclosure include a container attached to a dental treatment unit and filled with the liquid to be used for dental treatment, a tilting mechanism configured to tilt the container in accordance with a remaining amount of the liquid, and a detection device configured to detect the tilt of the container. In other words, the container filled with the liquid is tilted in response to a decrease in the liquid, and the tilt is detected. Accordingly, the timing to supply liquid can be detected with a simple configuration.

### [Brief Description of Drawings]

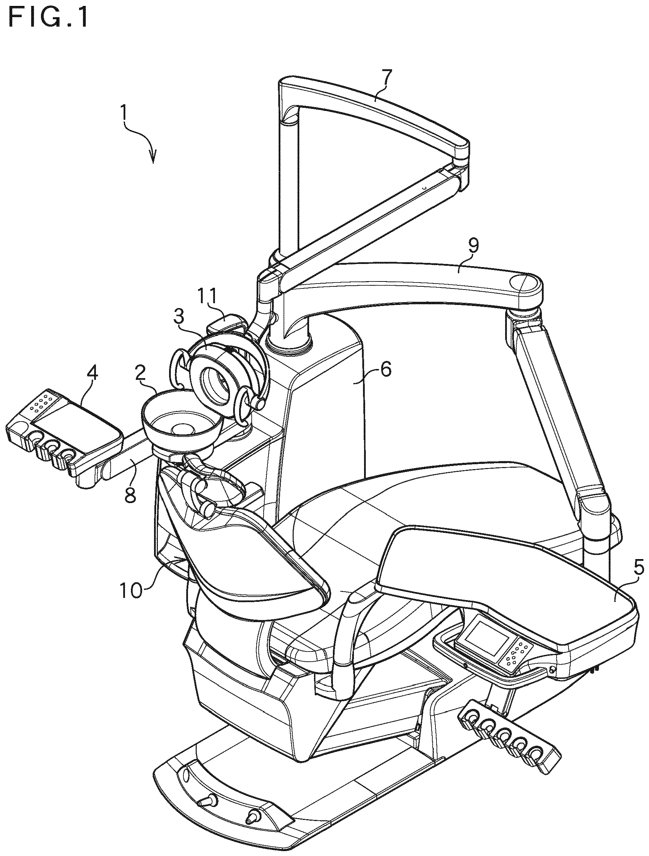

Fig. 1 is a perspective view illustrating the exterior of a dental treatment unit equipped with a water-level detection device according to a first embodiment of the present disclosure, in which the front side of the dental treatment unit is shown.

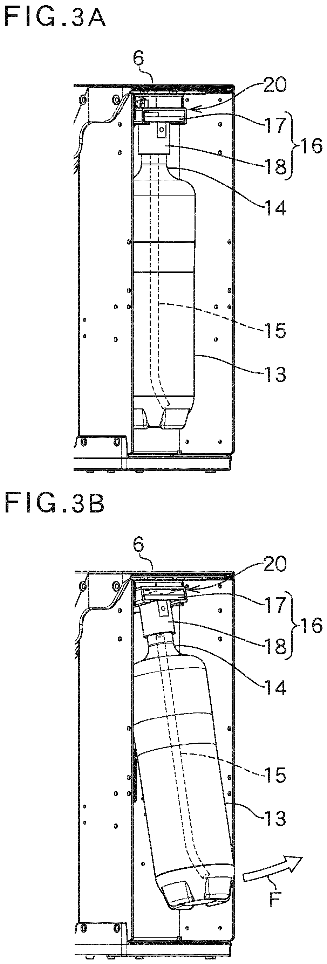

Figs. 3A and 3B illustrate an operation process of the water-level detection device according to the first embodiment of the present disclosure, in which Fig. 3A is a front view illustrating a state before the water-level detection device operates and Fig. 3B is a front view illustrating a state after the water-level detection device operates.

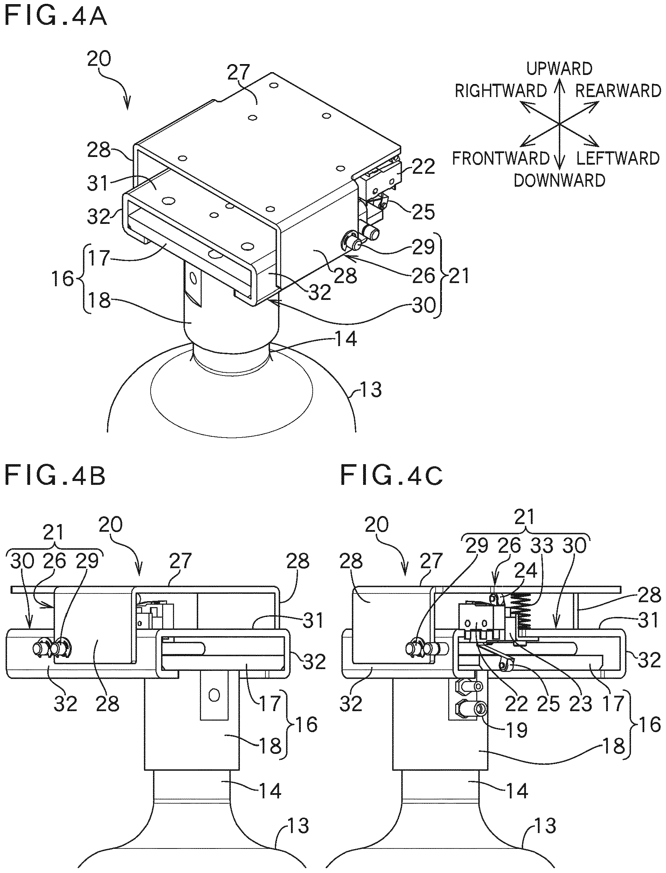

Figs. 4A. 4B and 4C illustrate the water-level detection device according to the first embodiment of the present disclosure, in which Fig. 4A is a perspective view in which the front side of the water-level detection device is shown, Fig. 4B is a view in which the front and right sides of the water-level detection device are shown, and Fig. 4C is a view in which the rear and left sides of the water-level detection device are shown.

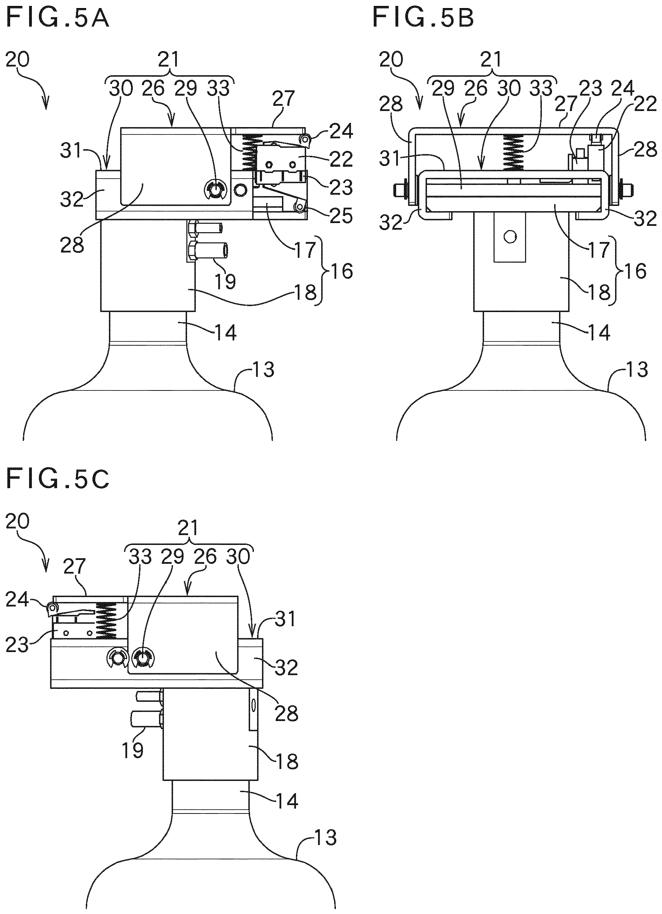

Figs. 5A, B and 5C illustrate the water-level detection device according to the first embodiment of the present disclosure, in which Fig. 5A is a left side view, Fig. 5B is a front view, and Fig. 5C is a right side view.

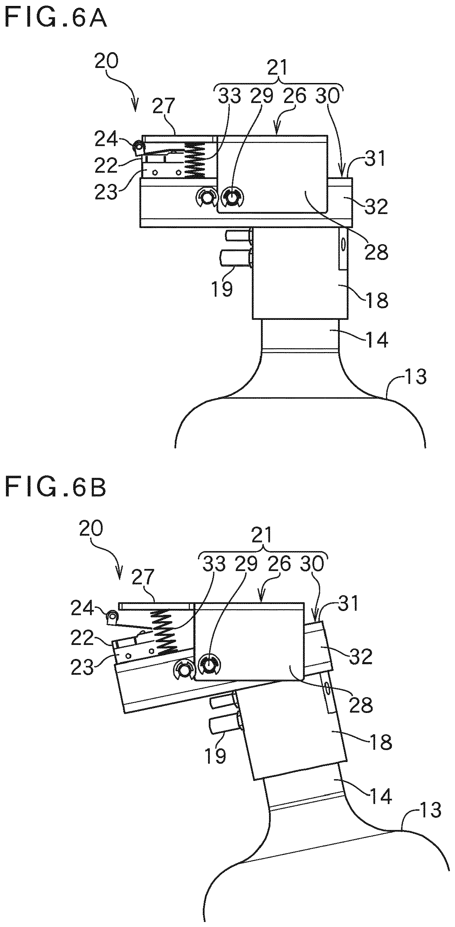

Figs. 6A and 6B are right side views of the water-level detection device according to the first embodiment of the present disclosure, in which Fig. 6A illustrates a state before the water-level detection device operates and Fig. 6B illustrates a state after the water-level detection device operates.

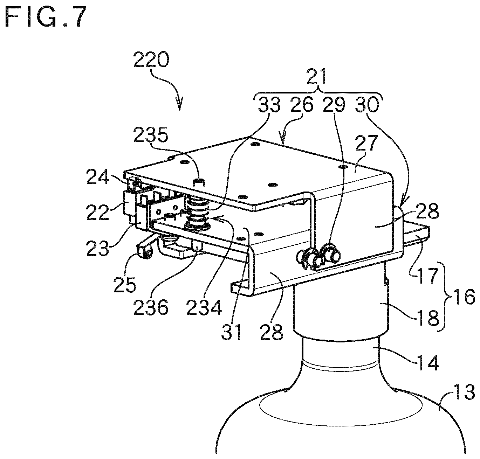

Fig. 7 is a perspective view illustrating a water-level detection device according to a second embodiment of the present disclosure.

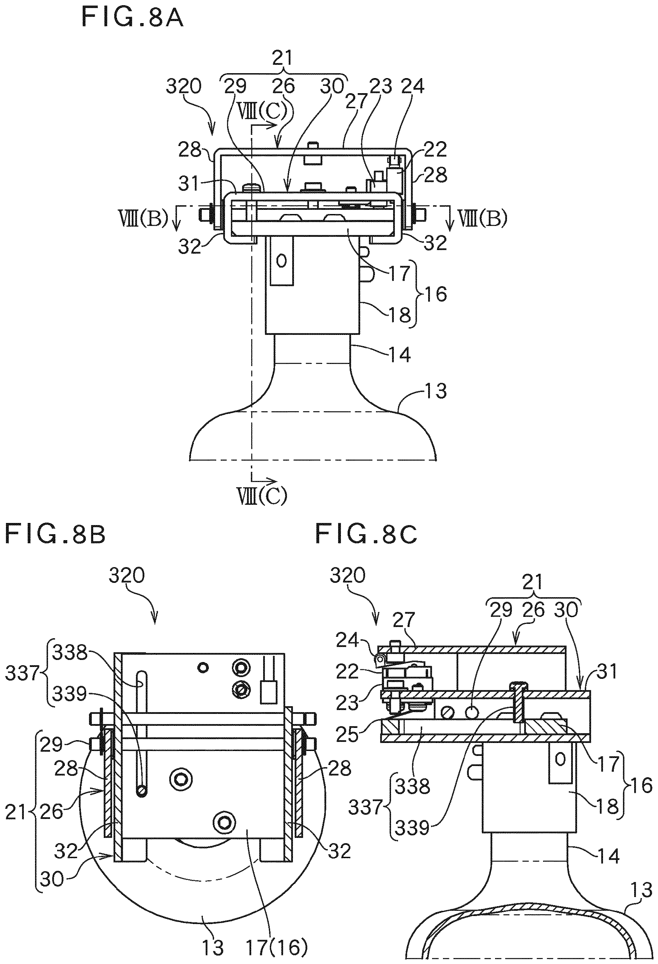

Figs. 8A, 8B and 8C illustrate a water-level detection device according to a third embodiment of the present disclosure before the water-level detection device operates, in which Fig. 8A is a front view, Fig. 8B is a cross section taken along line VIII(B)-VIII(B) of Fig. 8A, and Fig. 8C is a cross section taken along line VIII(C)-VIII(C) of Fig. 8A.

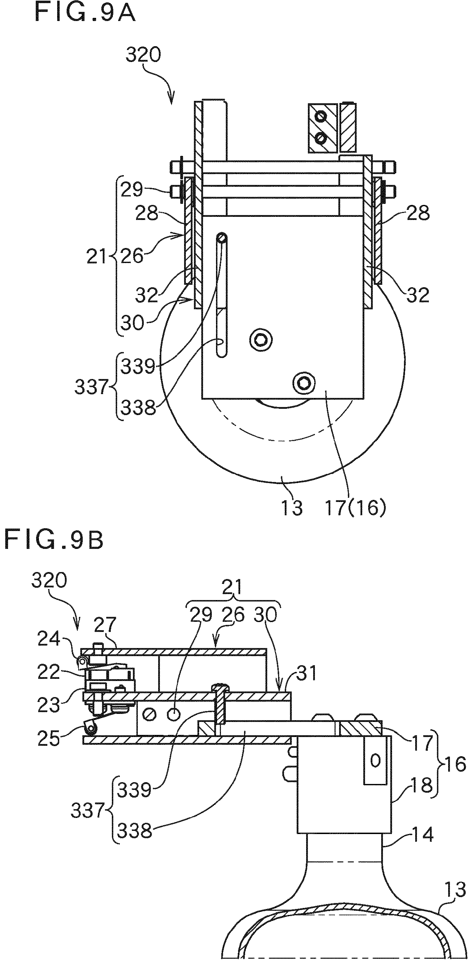

Figs. 9A and 9B illustrate the water-level detection device according to the third embodiment of the present disclosure after the water-level detection device operates, in which Fig. 9A is a cross section taken along line VIII(B)-VIII(B) of Fig. 8A, and Fig. 9B is a cross section taken along line VIII(C)-VIII(C) of Fig. 8A.

### [Description of Embodiments]

In a water-level detection device according to the present disclosure, a tilting mechanism includes a base member and a tiltable support that is positioned below the base member and supported by the base member with the revolving shaft interposed therebetween and from which the container is suspended. The tilting mechanism also includes an elastic member that is fitted between the base member and the tiltable support and that presses the tiltable support in a direction of tilting the tiltable support. The container becomes lighter as the amount of the liquid decreases, which reduces the reaction against a pressing force of the elastic member acting on the tiltable support and allows the elastic member to press the tiltable support. The tiltable support is thereby tilted pivotally on the revolving shaft. The detection device detects that the tiltable support is tilted. Accordingly, the timing to supply water can be detected with a simple configuration.

In the water-level detection device according to the present disclosure, the container is disposed at one side with respect to the revolving shaft, and the elastic member is disposed at another side with respect to the revolving shaft. In addition, the tiltable support pressed by the elastic member is caused to tilt due to an amount of the liquid decreasing. With this configuration, the tiltable support stays still due to the elastic force of the elastic member balancing the force of gravity acting on the container with the revolving shaft as the fulcrum. The one side of the tiltable support is pulled down by the container filled with the liquid due to the force of gravity acting on the container, whereas the other side of the tiltable support compresses the elastic member. When a decrease in the liquid reduces the weight of the container or the force of gravity, the other side of the tiltable support is pressed down, while the one side of the tiltable support raises the container. In other words, the elastic force of the elastic member tilts the tiltable support with the revolving shaft as the fulcrum, and the detection device detects that the tiltable support tilts. Accordingly, the timing to supply liquid can be detected and reported with a simple configuration.

The water-level detection device according to the present disclosure further includes a reporting device that starts to work with the detection device when the remaining amount of the liquid decreases to a predetermined level or lower. Accordingly, the reporting device can urge a practitioner to supply liquid.

In the water-level detection device according to the present disclosure, the reporting device reports by using sound or light or by displaying. Accordingly, the reporting device can report the timing to supply liquid to the practitioner involved in treatment without letting the practitioner have a look at it.

In the water-level detection device according to the present disclosure, the reporting device starts to operate when a duration of detection of the detection device reaches a predetermined duration or more. Accordingly, even if the detection device worked improperly due to vibration or chattering, the reporting devices could be prevented from reporting incorrectly.

In the water-level detection device according to the present disclosure, the container is attachable to and detachable from the tilting mechanism while the container is tilted. Accordingly, when the practitioner detaches the container by pulling the container downward or attaches the container by inserting the container upward, for example, the practitioner can attach or detach the container easily without interfering with the floor.

In a dental treatment unit according to the present disclosure, the above-described container is accommodated inside the dental treatment unit. Accordingly, the external appearance of the dental treatment unit is not deteriorated, while the practitioner can take out the container easily from the dental treatment unit.

The dental treatment unit according to the present disclosure includes the above-described water-level detection device. Accordingly, the dental treatment unit provides the same advantageous effects as those described for the water-level detection device.

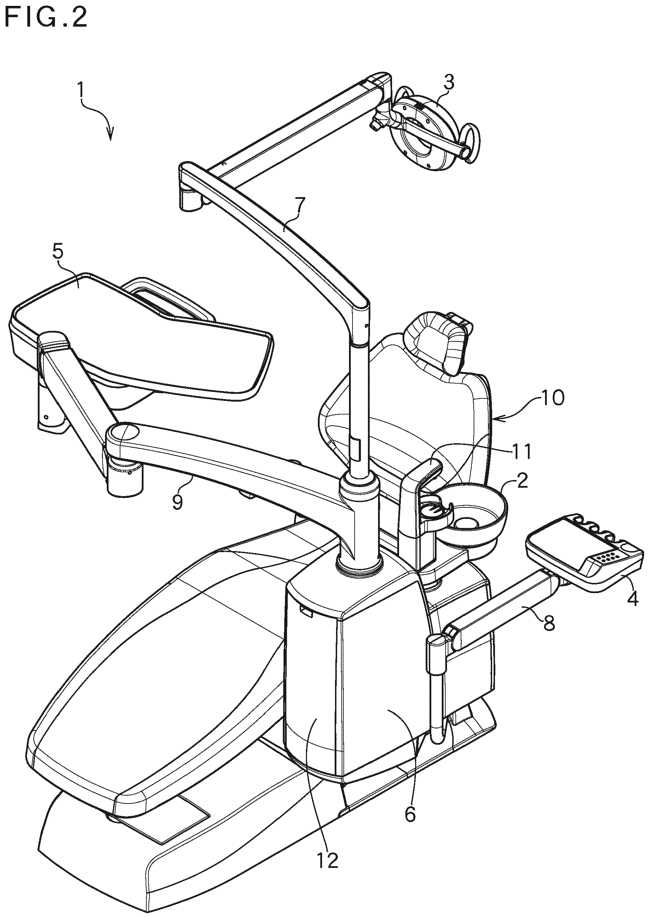

The following describes a water-level detection device according to a first embodiment of the present disclosure and a dental treatment unit equipped with the water-level detection device. Figs. 1 and 2 illustrate the exterior of a dental treatment unit 1.

As illustrated in Figs. 1 and 2, the dental treatment unit 1 includes a patient chair 10, a water outlet 11, a spittoon 2, a dental light 3, an instrument holder unit 4, and a doctor table 5. A patient to be treated lies on the patient chair 10. The water outlet 11 supplies water to the patient for washing the mouth, and the patient spits out the water into the spittoon 2 that is disposed near the water outlet 11. The dental light 3 illuminates the mouth of the patient. The instrument holder unit 4 holds various instruments (not illustrated). The doctor table 5, which also holds various instruments, is equipped with a panel for controlling the dental light 3 and the instruments and others. A main unit 6 supports the water outlet 11, the spittoon 2, the dental light 3, the instrument holder unit 4, and the doctor table 5. The main unit 6 is disposed next to the patient chair 10. The main unit 6 has a cover 12 and accommodates a container 13 (see Figs. 3A and 3B) behind the cover 12. The container 13 contains water to be used for dental treatment. The water is supplied to the water outlet 11 and to the instruments.

The spittoon 2 is shaped like a bowl and disposed at the top of the main unit 6. The dental light 3 is attached to the distal end of a first movable arm 7 that is connected to the main unit 6. The instrument holder unit 4 is attached to the distal end of a second movable arm 8 that is connected to the main unit 6. The doctor table 5 is attached to the distal end of a third movable arm 9 that is connected to the main unit 6. Each of the movable arms 7, 8, and 9 has multiple joints. The movable arms 7, 8, and 9 enable the dental light 3, the instrument holder unit 4, and the doctor table 5 to move freely. Examples of the instruments are turbines, micro motors, air motors, scalers, and syringes.

Next, the water-level detection device is described with reference to the drawings. Figs. 3A and 3B illustrate a state of the main unit 6 in which the cover 12 is removed and the container 13 is fitted to a water-level detection device 20. The container 13 of Fig. 3A is in an upright state, whereas the container 13 of Fig. 3B is in a tilted state in which the container 13 is tilted outward from the main unit 6. Figs. 4A, 4B, 4C, 5A, 5B, and 5C illustrate the exterior of the water-level detection device 20. Note that in the following description, the vertical direction is the up-down direction, the front-rear direction extends such that the main unit 6 opens frontward with the backside thereof facing rearward, and the right-left direction extends horizontally perpendicular to the front-rear direction (see Fig. 4A).

As illustrated in Figs. 3A and 3B, the water-level detection device 20 is fixed to the inner top surface of the main unit 6, and the container 13 is fitted to the water-level detection device 20. The water-level detection device 20 detects and reports the timing to supply water to the container 13 while the water-level detection device 20 tilts the container 13 in the direction of arrow F. In other words, when the amount of remaining water in the container 13 is sufficient, the container 13 stays upright and supplying water is not necessary. On the other hand, when the remaining amount of water is not sufficient, the container 13 is tilted and thereby urges to supply water. Note that the supplying water may be achieved by refilling the empty container 13 with water or by replacing the empty container 13 with a new one.

The container 13 is shaped cylindrically and elongated vertically and has a fitting portion 14 at an upper portion thereof. The fitting portion 14 is configured to have a diameter smaller than that of the body of the container 13 and to be fitted into the water-level detection device 20. More specifically, the water-level detection device 20 has a coupler 16, and the fitting portion 14 is connected to the coupler 16. The coupler 16 includes a tabular coupler plate 17 and a cylindrical coupler mouth portion 18 that is fixed to the lower surface of the coupler plate 17. The coupler mouth portion 18 has a water suction port 19 (see Fig. 4C) formed at the side surface and also has a tube 15 that extends downward from the inside of the coupler mouth portion 18. The fitting portion 14 of the container 13 is inserted into a bottom portion of the coupler mouth portion 18, while the tube 15 is inserted into the container 13. Note that the shape and volume of the container 13 is not specifically limited. For example, the volume of the container 13 may be 750 milliliter, 1 liter, or 2 liters.

As illustrated in Figs. 4A, 4B, 4C, 5A, 5B, and 5C, the water-level detection device 20 includes the above-described coupler 16, a tilting mechanism 21, a tilt detector 22, an installation detector 23, and a reporting device (not illustrated). The tilting mechanism 21 tilts the container 13 in accordance with the amount of remaining water, and the tilt detector 22 detects the tilt of the container 13. The installation detector 23 detects that the container 13 is fitted at an appropriate position. The reporting device works with the tilt detector 22.

The tilting mechanism 21 includes a base member 26 that is fixed to the main unit 6 and also includes a tiltable support 30. The tiltable support 30 is positioned below the base member 26 and supported by the base member 26 with the revolving shaft 29 being interposed between the tiltable support 30 and the base member 26. The tilting mechanism 21 also includes an elastic member 33 that is fitted between the base member 26 and the tiltable support 30. More specifically, the base member 26 has a tabular base plate 27 and tabular base side plates 28 that are joined to respective right and left edges of the base plate 27. The bottom of the base member 26 is open, and the sides of the base member 26 in the front-rear direction are also open. The base side plates 28 oppose each other. The tiltable support 30 has a tabular tiltable support plate 31 and tabular tiltable support side plates 32 that are joined to respective right and left edges of the tiltable support plate 31. The bottom of the tiltable support 30 is open, and the sides of the tiltable support 30 in the front-rear direction are also open. The tiltable support side plates 32, which oppose each other, have respective lower ends that are bent so as to get closer to each other. The tiltable support 30 is disposed between the base side plates 28 of the base member 26 so as to be spaced from the base plate 27. The base side plates 28 of the base member 26 and the tiltable support side plates 32 of the tiltable support 30 oppose one another and are connected by the revolving shaft 29. The coupler plate 17 of the coupler 16 is disposed inside the tiltable support 30 and fixed thereto. The elastic member 33 is, for example, a coil spring. The elastic member 33 is disposed, as viewed sideways, at a position shifted rearward from the revolving shaft 29, in other words, disposed at the other side with respect to the revolving shaft 29 (see Fig. 5C). Note that the type of the elastic member 33 is not specifically limited, but may be a member that can produce a restoring force due to compression or extension, such as a flat spring or a rubber member.

The tilt detector 22 and the installation detector 23 are, for example, contact type microswitches. The detectors 22 and 23 are fixed to a rear portion of the tiltable support 30. An actuator 24 of the tilt detector 22 faces upward and opposes the base plate 27 of the base member 26, whereas an actuator 25 of the installation detector 23 is disposed inside the tiltable support 30 so as to face downward. Note that the type of the detectors 22 and 23 is not specifically limited. The detectors 22 and 23 may be volume sensors, magnet type sensors, or infrared sensors.

The reporting device reports the state of the container 13 to a practitioner by using sound or light or by displaying in response to signals from the detectors 22 and 23. For example, a speaker or an electric buzzer may be used to report by sound. An LED may be used to report by light. A liquid crystal panel or an organic electroluminescent panel may be used to report by displaying. For example, the LED may be disposed in the vicinity of the spittoon 2 or the water outlet 11, and the panel may be disposed at the doctor table 5. The reporting device works with the tilt detector 22. More specifically, the reporting device is activated in the following manner. When the remaining amount of the water decreases to a predetermined level or less, the tilting mechanism 21 tilts the container 13, and the tilt detector 22 detects the tilt. Here, the reporting device does not operate until the duration of detection of the tilt detector 22 reaches a predetermined duration or more. The predetermined amount and the predetermined duration are not specifically limited here. For example, the predetermined amount may be approximately 200 milliliter and the predetermined duration may be approximately 5 seconds.

The container 13 is connected to the water-level detection device 20 configured as above with the coupler 16 interposed therebetween. When the rear end portion of the coupler plate 17 pushes up the actuator 25 of the installation detector 23, the installation detector 23 starts to operate and detects that the container 13 (the coupler 16) is installed appropriately (see Fig. 5A). In this state, the container 13 is suspended from the tilting mechanism 21 at a position shifted frontward, in other words, shifted toward the one side, with respect to the revolving shaft 29 (see Fig. 5C).

The water-level detection device 20 is configured as described above.

Next, operation and advantageous effects of the water-level detection device 20 will be described with reference to the drawings. Fig. 6A illustrates a state before the water-level detection device 20 operates, and Fig. 6B illustrates a state after the water-level detection device 20 operates.

As illustrated in Fig. 6A, when the remaining amount of the water in the container 13 is sufficient enough, a front portion of the tiltable support 30 is pulled down by the container 13 filled with a liquid due to gravity acting on the container 13, whereas a rear portion of the tiltable support 30 compresses the elastic member 33. The force of gravity acting on the container 13 and the restoring force generated by the compressed elastic member 33 causes the tiltable support 30 to balance with the revolving shaft 29 serving as the fulcrum. As a result, the base member 26 supports the tiltable support 30 substantially horizontally. In this state, the actuator 24 of the tilt detector 22 is pressed by the base plate 27 of the base member 26.

When the water in the container 13 is consumed and the container 13 becomes lighter with less gravity, as illustrated in Fig. 6B, the restoring force of the elastic member 33 causes the tiltable support 30 to tilt with the revolving shaft 29 as the fulcrum. The elastic member 33 presses down the rear portion of the tiltable support 30, which raises the front portion of the tiltable support 30 together with the container 13. The bottom portion of the container 13 moves frontward or in the direction of arrow F with the fitting portion 14 as the pivot (see Fig. 3B). As the amount of the water decreases, the tiltable support 30 tilts more. When the remaining amount of the water reaches, for example, approximately 200 milliliter or less, the actuator 24 of the tilt detector 22 is released. The tilt detector 22 thereby detects the tilt of the tiltable support 30. The water-level detection device 20 can detect the timing to supply water with this simple configuration.

Upon receiving a signal from the tilt detector 22, the reporting device reports a practitioner the timing to supply water either using sound from the speaker or the electric buzzer, using light from the LED disposed near the spittoon or the water outlet 11, or using a display panel disposed at the doctor table 5. These devices may work together to report to the practitioner. Thus, the reporting device urges the practitioner to refill or replace the container. Especially using sound or light in reporting the timing to supply water is advantageous because the practitioner involved in treatment does not need to have a look at it.

The reporting device does not start to operate until the duration of detection of the tilt detector 22, for example, exceeds approximately 5 seconds. This could prevent the reporting device from reporting incorrectly even if the tilt detector 22 worked improperly due to vibration or chattering.

The container 13 is detached from the coupler 16 while the container 13 is tilted. As illustrated in Fig. 3B, the tube 15 of the coupler 16 is inserted in the container 13. Protrusion of the container 13 in the direction of arrow F enables the practitioner to take the tube 15 out easily by pulling down the container 13 obliquely. The timing of supplying water can be detected and reported due to the container 13 being tilted, and the tilted container 13 can be detached and attached easily.

Next, a water-level detection device according to a second embodiment of the present disclosure will be described with reference to the drawings. Fig. 7 illustrates a water-level detection device 220 according to the second embodiment. Note that the following description will focus on configurations different from those of the water-level detection device 20 of the first embodiment. Similar configurations will be denoted by the same reference signs, and duplicated description will be omitted.

The water-level detection device 220 is different from the water-level detection device 20 in that the water-level detection device 220 includes an adjustment device 234 to adjust the compression of the elastic member 33 as illustrated in Fig. 7. The adjustment device 234 is formed of a pair of screws disposed in a rear portion of the tilting structure 21. The adjustment device 234 includes a fixation screw 235 and an adjustment screw 236. The fixation screw 235 is fixed to the base plate 27, and the adjustment screw 236 is rotatably attached to the tiltable support plate 31. The elastic member 33 is fitted between the screws 235 and 236. Turning the adjustment screw 236 moves the adjustment screw 236 closer to or away from the fixation screw 235. When the adjustment screw 236 moves closer to the fixation screw 235, the elastic member 33 is compressed to increase the restoring force. On the other hand, when the adjustment screw 236 moves away from the fixation screw 235, the compression of the elastic member 33 decreases, so does the restoring force. With this configuration, in the case of a large-quantity container 13 being attached to the tilting structure 21, the restoring force of the elastic member 33 can be increased in accordance with the force of gravity acting on the container 13 by turning the adjustment screw 236 to move closer to the fixation screw 235. The distance between the revolving shaft 29 and the center of gravity of the container 13 varies depending on the shape and length of the container 13, so does the moment acting thereon. In this case, the restoring force of the elastic member 33 can be adjusted in accordance with the moment.

Next, a water-level detection device according to a third embodiment of the present disclosure will be described with reference to the drawings. Figs. 8 and 9 illustrate a water-level detection device 320 according to the third embodiment. Note that the following description will focus on configurations different from those of the water-level detection device 20 of the first embodiment. Similar configurations will be denoted by the same reference signs, and duplicated description will be omitted.

The water-level detection device 320 is different from the water-level detection device 20 in that the water-level detection device 320 includes a slide mechanism 337 as illustrated in Figs. 8 and 9. The slide mechanism 337 slides the coupler 16 in the front-rear direction relative to the tiltable support 30. The slide mechanism 337 is formed of a guide hole 338 and a guide screw 339. The guide hole 338 is formed in the coupler plate 17 of the coupler 16, and the guide screw 339 is attached to the tiltable support plate 31 of the tiltable support 30. The guide hole 338 is a through hole that penetrates the coupler plate 17 in the up-down direction and is elongated in the front-rear direction. The guide hole 338 is formed in a right portion of the coupler plate 17. The guide screw 339 is mounted so as to penetrate the tiltable support plate 31 in the up-down direction at a position shifted rightward from the center of the tiltable support plate 31, in other words, at a position that matches the position of the guide hole 338. In other words, the guide screw 339 is fitted in the guide hole 338. Accordingly, the coupler 16 can be moved in a range defined by the guide hole 338. When the container 13 is detached from the coupler 16, the coupler 16 is slid frontward relative to the tiltable support 30, which enables easy detachment of the container 13.

Note that a water-level detection device according to another embodiment of the present disclosure may tilt the container 13 rearward or in the right-left direction (not illustrated).

### [Reference Signs List]

- 1: dental treatment unit
- 2: spittoon
- 3: dental light
- 4: instrument holder unit
- 5: doctor table
- 6: main unit
- 7: first movable arm
- 8: second movable arm
- 9: third movable arm
- 10: patient chair
- 11: water outlet
- 12: cover
- 13: container
- 14: fitting portion
- 15: tube
- 16: coupler
- 17: coupler plate
- 18: coupler mouth portion
- 19: water suction port
- 20, 220, 320: water-level detection device
- 21: tilting mechanism
- 22: tilt detector (detection device)
- 23: installation detector
- 24, 25: actuator
- 26: base member
- 27: base plate
- 28: base side plate
- 29: revolving shaft
- 30: tiltable support
- 31: tiltable support plate
- 32: tiltable support side plate
- 33: elastic member
- 234: adjustment device
- 235: fixation screw
- 236: adjustment screw
- 337: slide mechanism
- 338: guide hole
- 339: guide screw
- F: arrow

## Claims

1. A water-level detection device (20, 220, 320), comprising:
a container (13) attached to a dental treatment unit (1) and filled with a liquid to be used for dental treatment;
a tilting mechanism (21) configured to tilt the container (13) in accordance with a remaining amount of the liquid; and
a detection device (22) configured to detect tilt of the container (13), wherein
the tilting mechanism (21) includes
a base member (26),
a tiltable support (30) that is positioned below the base member (26) and supported by the base member (26) with a revolving shaft (29) interposed therebetween and from which the container (13) is suspended, wherein the tiltable support (30) is tilted pivotally on the revolving shaft (29), and
an elastic member (33) that is fitted between the base member (26) and the tiltable support (30) and that presses the tiltable support (30) in a direction of tilting the tiltable support (30).

2. The water-level detection device (20, 220, 320) according to Claim 1, wherein
the container (13) is disposed at one side with respect to the revolving shaft (29),
the elastic member (33) is disposed at another side with respect to the revolving shaft (29), and
the tiltable support (30) pressed by the elastic member (33) is caused to tilt due to an amount of the liquid decreasing.

3. The water-level detection device (20, 220, 320) according to Claim 1 or 2, wherein
the container (13) is attachable to and detachable from the tilting mechanism (21) while the container (13) is tilted.

4. A dental treatment unit (1), comprising:
the water-level detection device (20, 220, 320) according to any one of Claims 1 to 3.

5. The dental treatment unit (1) according to Claim 4, wherein
the container (13) is accommodated inside the dental treatment unit (1).

## Patentansprüche

1. Wasserstandserkennungsvorrichtung (20, 220, 320), die Folgendes umfasst:
einen Behälter (13), der an einer zahnärztlichen Behandlungseinheit (1) befestigt und mit einer für die Zahnbehandlung zu verwendenden Flüssigkeit gefüllt ist;
einen Kippmechanismus (21), der so konfiguriert ist, dass er den Behälter (13) in Abhängigkeit von der verbleibenden Flüssigkeitsmenge kippt; und
eine Erfassungsvorrichtung (22), die so konfiguriert ist, dass sie die Neigung des Behälters (13) erfasst, wobei
der Kippmechanismus (21)
ein Basiselement (26),
einen kippbaren Träger (30), der unter dem Basiselement (26) positioniert ist und von dem Basiselement (26) mit einer dazwischen angeordneten Drehwelle (29) getragen wird und an dem der Behälter (13) aufgehängt ist, wobei der kippbare Träger (30) schwenkbar an der Drehwelle (29) gekippt wird, und
ein elastisches Element (33), das zwischen dem Basiselement (26) und der kippbaren Stütze (30) angebracht ist und das die kippbare Stütze (30) in eine Richtung des Kippens der kippbaren Stütze (30) drückt, umfasst.

2. Wasserstandserfassungsvorrichtung (20, 220, 320) nach Anspruch 1, wobei
der Behälter (13) an einer Seite in Bezug auf die Drehwelle (29) angeordnet ist,
das elastische Element (33) auf einer anderen Seite in Bezug auf die Drehwelle (29) angeordnet ist, und
der kippbare Träger (30), der durch das elastische Element (33) gedrückt wird, durch eine abnehmende Flüssigkeitsmenge zum Kippen gebracht wird.

3. Wasserstandserfassungsvorrichtung (20, 220, 320) nach Anspruch 1 oder 2, wobei
der Behälter (13) an dem Kippmechanismus (21) befestigt und von diesem gelöst werden kann, während der Behälter (13) gekippt wird.

4. Zahnärztliche Behandlungseinheit (1), umfassend:
die Wasserstandserfassungsvorrichtung (20, 220, 320) nach einem der Ansprüche 1 bis 3.

5. Zahnärztliche Behandlungseinheit (1) nach Anspruch 4, wobei
der Behälter (13) im Inneren der zahnärztlichen Behandlungseinheit (1) untergebracht ist.

## Revendications

1. Dispositif de détection de niveau d'eau (20, 220, 320), comprenant :
un récipient (13) fixé à une unité de traitement dentaire (1) et rempli d'un liquide devant être utilisé pour un traitement dentaire ;
un mécanisme d'inclinaison (21) configuré pour incliner le récipient (13) conformément à une quantité restante du liquide ; et
un dispositif de détection (22) configuré pour détecter une inclinaison du récipient (13), dans lequel
le mécanisme d'inclinaison (21) comporte
un élément de base (26),
un support (30) pouvant être incliné qui est positionné sous l'élément de base (26) et supporté par l'élément de base (26) avec un arbre rotatif (29) interposé entre ceux-ci et à partir duquel le récipient (13) est suspendu, dans lequel le support (30) pouvant être incliné est incliné de manière pivotante sur l'arbre rotatif (29), et
un élément élastique (33) qui est installé entre l'élément de base (26) et le support (30) pouvant être incliné et qui presse le support (30) pouvant être incliné dans une direction d'inclinaison du support (30) pouvant être incliné.

2. Dispositif de détection de niveau d'eau (20, 220, 320) selon la revendication 1, dans lequel
le récipient (13) est disposé au niveau d'un côté par rapport à l'arbre rotatif (29),
l'élément élastique (33) est disposé au niveau d'un autre côté par rapport à l'arbre rotatif (29), et
le support (30) pouvant être incliné pressé par l'élément élastique (33) est amené à s'incliner en raison d'une diminution d'une quantité du liquide.

3. Dispositif de détection de niveau d'eau (20, 220, 320) selon la revendication 1 ou 2, dans lequel
le récipient (13) peut être fixé au mécanisme d'inclinaison (21) et détaché de celui-ci tandis que le récipient (13) est incliné.

4. Unité de traitement dentaire (1), comprenant :
le dispositif de détection de niveau d'eau (20, 220, 320) selon l'une quelconque des revendications 1 à 3.

5. Unité de traitement dentaire (1) selon la revendication 4, dans laquelle
le récipient (13) est logé à l'intérieur de l'unité de traitement dentaire (1).
